# EUROPÄISCHE PATENTSCHRIFT

(11) **EP 1 328 427 B1**
(45) Veröffentlichungstag und Bekanntmachung des Hinweises auf die Patenterteilung: **22.08.2012**
(21) Anmeldenummer: 01987717.4
(22) Anmeldetag: 04.10.2001
(51) Int. Cl.: B60T 8/175, B60T 8/1769

(54) **Verfahren zur Erkennung eines stabilen oder instabilen Raddrehverhaltens für ein Antriebsschlupfregelungssystem**
Method for detecting a stable or unstable wheel behaviour for a traction control system
Procédé pour la détection d'une roue stable ou instable pour un système de regulation antipatinage

(30) Priorität: 17.10.2000 DE 10051282
(43) Veröffentlichungstag der Anmeldung: 23.07.2003
(73) Patentinhaber: Continental Teves AG & Co. oHG, 60488 Frankfurt (DE)
(72) Erfinder: GRONAU, Ralph, 35083 Wetter (DE); SAPPOK, Burkhard, 67434 Neustadt (DE); SCHNEIDER, Gerold, 35085 Ebsdorfergrund (DE); CASPARI, Roland, 60489 Frankfurt (DE)
(86) Internationale Anmeldenummer: PCT/EP2001/011445
(87) Internationale Veröffentlichungsnummer: WO 2002/032732

(56) Entgegenhaltungen:
- EP-A- 0 496 252
- EP-A- 1 013 523
- DE-A- 19 527 531
- US-A- 5 341 297
- US-A- 5 423 601
- US-A- 5 566 094

## Beschreibung

Die Erfindung bezieht sich auf ein Verfahren zur Erkennung eines stabilen oder instabilen Raddrehverhaltens für ein Antriebsschlupfregelungssystem in einer für Fehlanregelungen kritischen Situation, wie sie beispielsweise bei einer Bergabfahrt gegeben ist. Das Verfahren ist insbesondere, aber nicht ausschließlich, für Fahrzeuge mit Allradantrieb vorgesehen. Es handelt sich um ein Verfahren, bei dem aus dem Drehverhalten der einzelnen Fahrzeugräder eine Fahrzeug-Referenzgeschwindigkeit und ein Fahrzeug-Verzögerungssignal abgeleitet werden und bei dem mit Hilfe eines Längsverzögerungssensors ein Fahrzeug-Verzögerungssignal gewonnen wird.

Aus der WO 98/16838 ist bereits ein Verfahren zur Bestimmung einer Fahrzeugverzögerung oder -beschleunigung aus den Radsensorsignalen eines Schlupfregelungssystems bekannt.

In der US 5,423,601 A werden ein Antiblockierregelverfahren (ABS) und ein Antriebsschlupfregelverfahren (ASR) offenbart, bei welchen die Abbremsung bzw. Traktion durch Umschalten der ABS/ASR-Regelstrategie bei großem Fahrbahngefälle/- steigung verbessert wird. Dabei wird ein Fahrbahngefälle erkannt, wenn der Wert der Differenz zwischen einer aus den Radgeschwindigkeiten berechneten Fahrzeugverzögerung und einer gemessenen Fahrzeugverzögerung einen Schwellwert übersteigt.

Die auf diese Weise gewonnenen Signale geben jedoch, weil der Einfluss der Hangabtriebskraft bzw. der Hangneigung nicht berücksichtigt werden können, die tatsächlich vorliegenden Verhältnisse bzw. die tatsächlich vorliegende Fahrsituation nur ungenügend wieder. Durch diese Tatsache kommt es in der Praxis zu einer ungerechtfertigt tiefliegenden Fahrzeug-Referenzgeschwindigkeit, was Fehlanregelungen des ASR-Systems, d.h. Einsetzen der ASR-Regelung trotz stabil laufender Räder, zur Folge haben kann.

Der vorliegenden Erfindung liegt daher die Aufgabe zugrunde, ein Verfahren zur Erkennung eines stabilen oder instabilen Raddrehverhaltens für ein Antriebsschlupfregelungssystem zu entwickeln, mit dem in Situationen der vorgenannten Art Fehlanregelungen zuverlässig verhindert werden können.

Es hat sich herausgestellt, dass diese Aufgabe durch ein Verfahren zur Erkennung eines stabilen oder instabilen Raddrehverhaltens durch das Verhindern oder Reduzieren von Fehlregelungen oder Fehlanregelungen eines Antriebsschlupfregelungssystems (ASR-Systems)in einer für Fehlanregelungen kritischen Situation, wie eine Bergabfahrt, insbesondere für Fahrzeuge mit Allradantrieb, bei dem aus dem Drehverhalten der einzelnen Fahrzeugräder eine Fahrzeug-Referenzgeschwindigkeit und ein Fahrzeug-Verzögerungssignal abgeleitet werden und bei dem mit Hilfe eines Längsverzögerungssensors (eines B-Sensors) ein Fahrzeug-Verzögerungssignal gewonnenen wird, wobei der zeitliche Verlauf der beiden Verzögerungssignale, nämlich des aus dem Raddrehverhalten abgeleiteten und des mit Hilfe des Längsverzögerungssensors (B-Sensor) gewonnen Verzögerungssignals, verglichen wird und anhand einer Analyse des zeitlichen Verlaufs der beiden Verzögerungssignale erkannt wird, ob stabiles oder in stabiles Raddrehverhalten vorliegt, dessen Besonderheit darin besteht, dass zum Vergleichen und Analysieren der Verzögerungssignale ein Signal gebildet wird, das die Differenz zwischen dem aus dem Raddrehverhalten abgeleiteten und dem mit Hilfe des Längsverzögerungssensors (B-Sensor) gewonnen Verzögerungssignal wiedergibt und dass das Differenzsignal mit Hilfe einer mehrstufigen Filteranordnung bewertet wird.

Die Ursache für eine mögliche Fehlanregelung bei Bergabfahrt ist bei den herkömmlichen Regelungssystemen die Verfälschung des von dem Längsverzögerungssensor (B-Sensor) stammenden Signals infolge der Hangneigung; das Längsverzögerungssignal wird nämlich um einen der Hangneigung entsprechenden Wert reduziert.

Die aus dem Motormoment und der Gangstufe abgeleitete, theoretisch maximal mögliche Fahrzeugbeschleunigung (in der Ebenen) stellt bei Bergabfahrt nicht mehr den oberen Grenzwert dar, weil die der Hangabtriebskraft entsprechende Beschleunigung hinzugerechnet werden muss. Diese mögliche Zusatzbeschleunigung, verursacht durch die Hangabtriebskraft, kann nicht durch einen entsprechenden Offset berücksichtigt werden, da sonst auf Niedrigreibwert-Fahrbahnen instabiles Raddrehverhalten nicht rechtzeitig erkannt werden könnte.

Nach einem weiteren Ausführungsbeispiel der Erfindung wird das Differenzsignal zwischen den beiden Verzögerungssignalen mit Hilfe einer mehrstufigen Filteranordnung gewonnen. Diese

Filteranordnung enthält ein erstes Tiefpass-Filter, dessen Grenzfrequenz bei 1 - 3 Hz liegt und das daher im folgenden als langsames Filter bezeichnet wird. Außerdem ist ein zweites Tiefpass-Filter vorhanden, dessen Grenzfrequenz bei etwa 4 - 10 Hz liegt und das daher als (vergleichsweise) schnelles Filter bezeichnet wird. Der Verlauf und die Amplitude der Ausgangssignale dieser beiden Tiefpass-Filter werden verglichen und zur Erkennung von instabilem oder stabilem Radverlauf ausgewertet. Hierbei hat es sich als vorteilhaft erwiesen, eine Abweichung des mit dem zweiten Filter gewonnenen Signals von dem mit dem ersten Filter gewonnenen Signal, die innerhalb eines vorgegebenen Toleranzbereiches liegt, als Indiz für ein stabiles Drehverhalten der Fahrzeugräder zu bewerten, während eine Überschreitung des Toleranzbereiches als Indiz für instabilen Radlauf gilt.

Dieser Toleranzbereich, dessen Einhaltung auf stabiles Raddrehverhalten hinweist, wird erfindungsgemäß durch Vorgabe eines Toleranzbandes gebildet. Die Toleranzgrenzen werden in positiver und negativer Abweichung durch Parallelen im Abstand von etwa ± 0,02 g bis 0,1 g, insbesondere von ± 0,05 g ("g" bedeutet die Erdbeschleunigungskonstante) realisiert.

Weitere Einzelheiten der Erfindung gehen aus der folgenden Erläuterung von Ausführungsbeispielen anhand der beigefügten Abbildungen hervor. Es zeigen:
- Fig. 1: in schematisch vereinfachter Darstellung einige das Fahrzeugverhalten oder Fahrverhalten und den Regelablauf beschreibende Größen in einer für das erfindungsgemäße Verfahren relevanten Situation,
- Fig. 2: in gleicher Darstellungsweise wie Fig. 1 die gleichen Signale in einer Situation mit stabilem Raddrehverhalten und
- Fig. 3: in gleicher Darstellungsweise die gleichen Größen wie in Fig. 1 und 2 in einer Situation mit instabilem Raddrehverhalten.

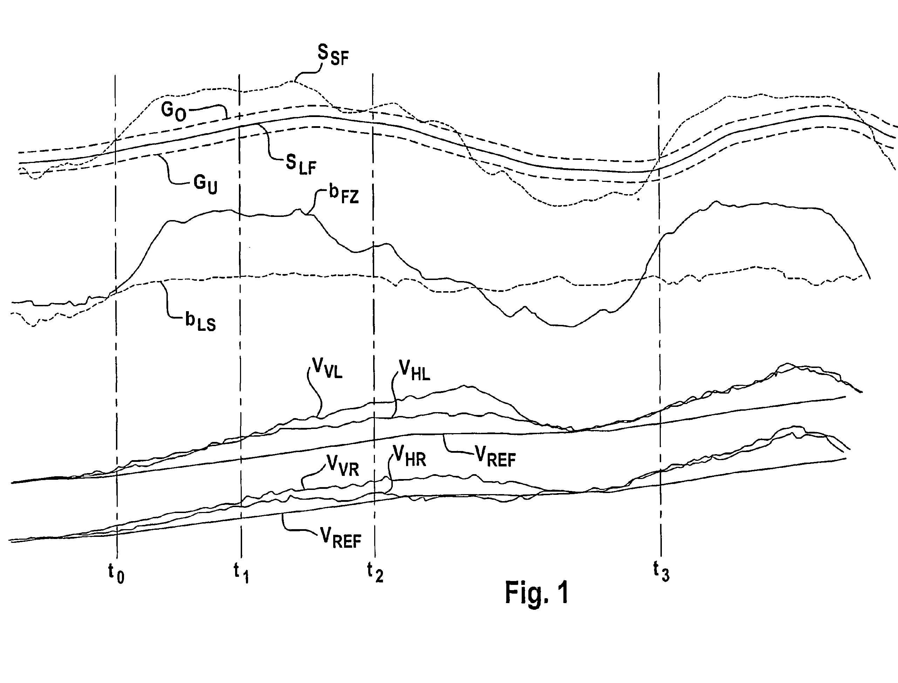

In Fig. 1 sind einige Signalverläufe während einer kurzen Zeitspanne von einigen Sekunden wiedergegeben, die eine für Fehlanregelungen kritische Situation wiedergeben und zur Erläuterung der Wirkungsweise und des Ablaufs des erfindungsgemäßen Verfahrens besonders geeignet sind.

Die Radsensorsignale, die den Verlauf der Geschwindigkeiten der einzelnen Fahrzeugräder in der hier betrachteten Situation wiedergeben, sind mit V_{VL},V_{HL},V_{VR} und V_{HR} bezeichnet. Außerdem ist eine Fahrzeug-Referenzgeschwindigkeit V_{REF} dargestellt, die bekanntlich auf Basis der Drehgeschwindigkeiten der einzelnen Räder ermittelt werden kann und als Regelungs-Bezugsgröße dient.

Das erfindungsgemäße Verfahren beruht daher auf dem Vergleichen und Analysieren von Verzögerungssignalen, die auf verschiedene Weisen gewonnen werden. In Fig. 1 ist der Verlauf eines B-Sensorsignals, nämlich des Ausgangssignals eines Fahrzeug-Längsverzögerungssensors (B-Sensor), und der Verlauf eines Fahrzeugverzögerungssignals, das aus dem Drehverhalten der einzelnen Räder abgeleitet wurde, wiedergegeben.

Die beiden Verzögerungssignale b_{LS} und b_{FZ}, die der B-Sensor liefert und die aus den Radsensorsignale abgeleitet werden, werden miteinander verglichen. Es wird ein Differenzsignal S gebildet, das erfindungsgemäß nach dem Passieren einer Filteranordnung zum Erkennen von stabilem und instabilem Radlauf ausgewertet wird.

Die Filteranordnung besteht in dem hier beschriebenen Ausführungsbeispiel aus einem ersten und einem zweiten Tiefpass. Die Grenzfrequenz des ersten Tiefpass-Filters, im folgenden als "langsames Filter" bezeichnet, liegt in dem hier beschriebenen Beispiel in der Größenordnung von 1 bis 3 Hz, die Grenzfrequenz des zweiten Tiefpass-Filters, des "schnellen Filters" in der Größenordnung von 4 bis 10 Hz. Auf diese Weise entsteht ein sich relativ langsam änderndes Differenzsignal S_{LF} und ein auch die schnelleren Änderungen wiedergebendes Signal S_{SF}. S_{SF} ist in Fig. 1 gestrichelt dargestellt, S_{LF} mit durchgezogener Linie.

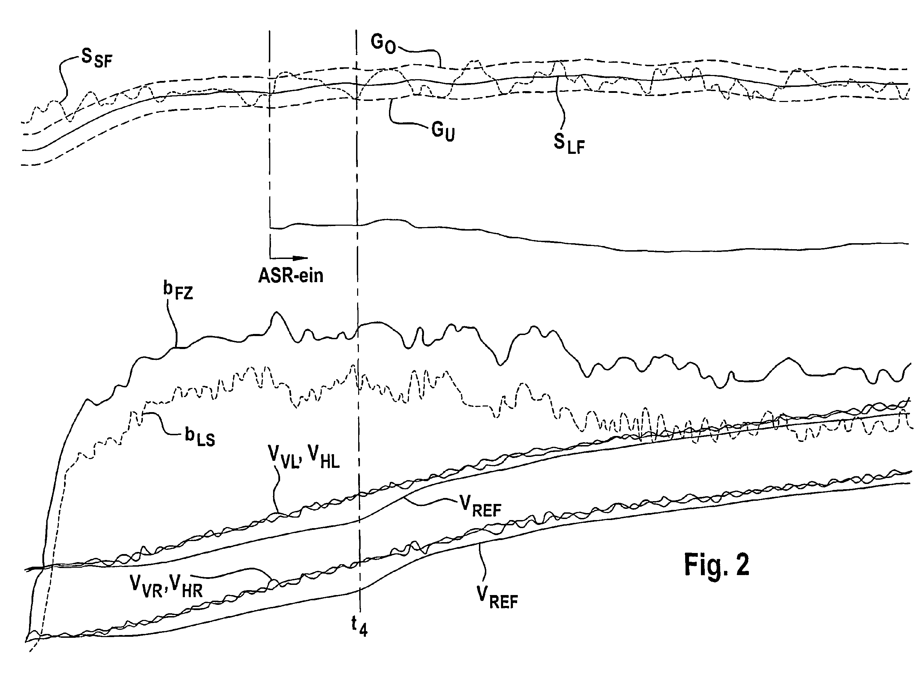

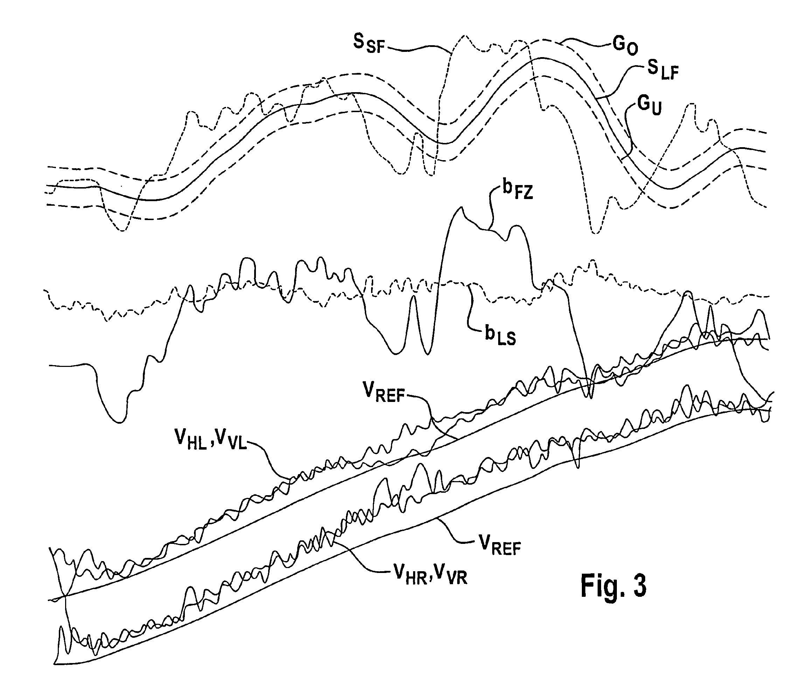

Die Abweichung des mit Hilfe des schnellen Filters gewonnenen Signals S_{LF} von dem durch das langsame Filter gewonnene Signal S_{LF} liefert ein Indiz oder Hinweis auf die Stabilität der Fahrzeugräder. Im Ausführungsbeispiel nach Fig. 1 ist durch ein Offset von z.B. ± 0,05 g ein Toleranzband um das mit dem ersten Tiefpass-Filter gewonnenen Differenzsignals S_{LF} entstanden. Dieses Toleranzband bildet eine obere und eine untere Grenze Gₒ bzw. G_{U} für das "schnelle Signal" S_{SF} in Relation zu dem "langsamen Signal" S_{LF}. Wie hier später anhand der Fig. 2 und 3 noch näher erläutert wird, wird erfindungsgemäß nur solange "stabiler" Radlauf angenommen, wie das "schnelle" Signal S_{SF} innerhalb der Toleranzgrenzen Gₒ, G_{U} verläuft. Überschreitet das "schnelle" Differenzsignal S_{SF} die Toleranzgrenzen G_{U}, Gₒ, ist dies ein Hinweis auf Instabilitäten, d.h. auf "instabilen" Radlauf, so dass eine ASR-Regelung zugelassen werden kann (eine Korrektur der Referenzgeschwindigkeit wird nicht vorgenommen).

Im Beispiel nach Fig. 1 steigt zum Zeitpunkt tₒ das mit dem schnellen Filter gewonnene Differenzsignal S_{SF} über den oberen Grenzwert Gₒ an. Zuvor lag stabiles Raddrehverhalten vor, weshalb der Verlauf der Radgeschwindigkeiten V_{VL}, V_{HL}, V_{VR} und V_{HR} und der Fahrzeug-Referenzgeschwindigkeit V_{REF} höchstens geringfügig auseinander lag. Das zum Zeitpunkt t₀ den oberen Grenzwert Gₒ des Toleranzbereichs überschreitende Differenzsignal S_{SF} ist ein Indiz für instabilen Radlauf bzw. für instabiles Raddrehverhalten. Im Anschluss an tₒ wird, wie die Radgeschwindigkeits-Kennlinien im unteren Teil der Fig. 1 zeigen, die Fahrzeug-Referenzgeschwindigkeit V_{REF} nicht mehr korrigiert, so dass etwa zum Zeitpunkt t₁ - infolge zu hohen Radschlupfes, zu hoher Radbeschleunigung etc. - eine Antriebsschlupfregelung (ASR-Regelung) eingeleitet werden kann. Die Signale, insbesondere das von dem schnellen Filter gelieferte Differenzsignal S_{SF}, weisen auf instabiles Raddrehverhalten hin, weshalb es sich beim Einsetzen einer ASR-Regelung nicht um eine "Fehl"-Anregelung handeln würde.

Aus dem weiteren Verlauf der Verzögerungssignale und der Differenzsignale ist erkennbar, dass durch die ASR-Regelung die Stabilität des Radlaufs zunächst erhöht wird, woran sich, etwa zu den Zeitpunkten t₂ und t₃, erneut instabile Phasen anschließen, die dazu führen, dass das mit dem schnellen Filter gewonnene Differenzsignal S_{SF} erneut das Toleranzband G_{O}/G_{U} verlässt.

In Fig. 2 und Fig. 3 sind weitere Ausschnitte aus dem Regelgeschehen durch Wiedergabe von Messkurven, die in verschiedenen Situationen gewonnen wurden, dargestellt.

Fig. 2 bezieht sich auf eine Bergabfahrt mit einem Allradangetriebenen Fahrzeug bei durchweg stabilem Radlauf. Die in den unteren Kurven wiedergegebenen Radgeschwindigkeiten V_{VL}, V_{HL} sowie V_{VR} und V_{HR} sind kaum voneinander zu unterscheiden. Die Fahrzeug-Referenzgeschwindigkeit V_{REF} wird in dem Ausführungsbeispiel nach Fig. 2 zum Zeitpunkt t₄ relativ stark erhöht und dadurch den Radgeschwindigkeiten V_{VL}, V_{HL}, V_{VR} V_{HR} angenähert. Die Verzögerungssignale b_{FZ}, dies ist das aus dem Raddrehverhalten abgeleitete Fahrzeugverzögerungssignal, und das mit dem Längsverzögerungssensor gewonnene Verzögerungssignal b_{LS} verlaufen relativ "ähnlich", wenn auch in einem bestimmten Abstand. Die Differenz der beiden Verzögerungssignale b_{FZ} und b_{LS} geht auf die durch die Bergabfahrt bzw. durch die Hangneigung hervorgerufene zusätzliche Verzögerung zurück, die das mit dem Längskraftsensor gewonnene Signal um einen annähernd konstanten, der Hangneigung entsprechenden Betrag verringert. Das durch das langsame Filter gewonnene Differenzsignal S_{LF} und das Toleranzband oder der Toleranzbereich, der durch die zum Differenzsignal S_{LF} verlaufenden Parallelen Gₒ und G_{U} vorgegeben ist, sind im oberen Teil der Fig. 2 dargestellt. Das mit Hilfe des schnellen Filters gewonnene Signal S_{SF} verläuft im wesentlichen innerhalb des Toleranzbandes. Folglich weisen die Indizien in dieser Situation auf einen "stabilen" Lauf aller Fahrzeugräder hin.

In Fig. 2 ist außerdem ein Signal "ASR-ein" wiedergegeben, das in der dargestellten Situation zu einer Fehlanregelung führen würde. In diesem Fall könnte die ASR-Anregelung durch die Abweichung der Fahrzeug-Referenzgeschwindigkeit von den Radgeschwindigkeiten zum Zeitpunkt t_{ASR-ein} ausgelöst werden, wenn dies nicht als durch das erfindungsgemäße Verfahren als Gefahr für eine Fehlanregelung erkannt und unterbunden worden wäre.

In der Situation nach Fig. 3 liegt eindeutig instabiles Raddrehverhalten vor. Durch Analyse des Verlaufs der Radgeschwindigkeiten V_{VL}, V_{HL}, V_{VR} V_{HR} ist dies nicht zu erkennen oder zumindest nicht eindeutig festzustellen. Der Verlauf der Fahrzeuglängsverzögerung b_{LS} und der aus dem Raddrehverhalten abgeleiteten Fahrzeugverzögerung b_{FZ} ist im Gegensatz zu diesen beiden Größen in der Situation nach Fig. 2 keineswegs "ähnlich". Das "langsame" Differenzsignal S_{LF} mit den zugehörigen Toleranzbereichgrenzen Gₒ und G_{U} weicht stellenweise erheblich von dem Verlauf des mit dem schnellen Filter gewonnenen Differenzsignals S_{SF} ab. Dies allein wäre ein starkes Indiz für instabilen Radlauf oder instabiles Raddrehverhalten. Zusätzlich ist jedoch aus Fig. 3 noch erkennbar, dass sich der Gradient des Differenzsignals S_{LF} in dem Betrachtungszeitraum relativ stark ändert, was ebenfalls auf instabiles Raddrehverhalten hinweist. In der Situation nach Fig. 3 wird keine Korrektur der Fahrzeug-Referenzgeschwindigkeit vorgenommen. Das Einsetzen eines Antriebsschlupfregelungsvorgangs wird in dieser Situation durch das erfindungsgemäße Verfahren nicht beeinflusst bzw. nicht unterbunden.

Das erfindungsgemäße Verfahren zeigt also einen Weg, der es ermöglicht, in Situationen, die für ein ASR-Regelungssystem kritisch sind, insbesondere bei einer Bergabfahrt, instabiles Raddrehverhalten von stabilem Raddrehverhalten unterscheiden zu können. Mit Hilfe des erfindungsgemäßen Verfahrens wird in einer solchen Situationen eine Fehlanregelung vermieden und dadurch die Übertragung des vollen Antriebsmoments auf die Räder ermöglicht. Eine Fehlanregelung hätte in einer derartigen Situation eine unerwünschte, unangenehme und in manchen Fällen sogar gefährliche Verringerung des Vortriebs zur Folge.

## Patentansprüche

1. Verfahren zur Erkennung eines stabilen oder instabilen Raddrehverhaltens durch das Verhindern oder Reduzieren von Fehlregelungen oder Fehlanregelungen eines Antriebsschlupfregelungssystems (ASR-Systems)in einer für Fehlanregelungen kritischen Situation, wie eine Bergabfahrt, insbesondere für Fahrzeuge mit Allradantrieb, bei dem aus dem Drehverhalten der einzelnen Fahrzeugräder eine Fahrzeug-Referenzgeschwindigkeit und ein FahrzeugVerzögerungssignal abgeleitet werden und bei dem mit Hilfe eines Längsverzögerungssensors (eines B-Sensors) ein Fahrzeug-Verzögerungssignal gewonnenen wird, wobei der zeitliche Verlauf der beiden Verzögerungssignale, nämlich des aus dem Raddrehverhalten abgeleiteten und des mit Hilfe des Längsverzögerungssensors (B-Sensor) gewonnen Verzögerungssignals, verglichen wird und anhand einer Analyse des zeitlichen Verlaufs der beiden Verzögerungssignale erkannt wird, ob stabiles oder in stabiles Raddrehverhalten vorliegt, **dadurch gekennzeichnet, dass** zum Vergleichen und Analysieren der Verzögerungssignale ein Signal gebildet wird, das die Differenz zwischen dem aus dem Raddrehverhalten abgeleiteten und dem mit Hilfe des Längsverzögerungssensors (B-Sensor) gewonnen Verzögerungssignal wiedergibt und dass das Differenzsignal mit Hilfe einer mehrstufigen Filteranordnung bewertet wird.

2. Verfahren nach Anspruch 1, **dadurch gekennzeichnet, dass** die zeitliche Änderung des Differenzsignals zur Erkennung von stabilem oder instabilem Raddrehverhalten ausgewertet wird.

3. Verfahren nach Anspruch 1, **dadurch gekennzeichnet, dass** eine Filteranordnung mit einem ersten Tiefpass-Filter, dessen Grenzfrequenz in der Grössenordnung von 1 bis 3 Hz liegt, und mindestens mit einem zweiten Tiefpass-Filter, dessen Grenzfrequenz in der Größenordnung von 4 bis 10 Hz liegt, verwendet wird und dass der Verlauf und/oder die Amplitude der mit Hilfe der Tiefpass-Filter gewonnenen Signale miteinander verglichen und zur Erkennung von instabilem und stabilem Radverlauf ausgewertet wird.

4. Verfahren nach Anspruch 3, **dadurch gekennzeichnet, dass** eine Abweichung des mit dem zweiten Filter gewonnenen Signals von dem mit dem ersten Filter gewonnenen Signal, die innerhalb eines vorgegebenen Toleranzbereiches liegt, als Indiz für ein stabiles Drehverhalten der Fahrzeugräder bewertet wird, während eine Überschreitung des Toleranzbereiches als Indiz für instabilen Radlauf aufgefasst wird.

5. Verfahren nach Anspruch 4, **dadurch gekennzeichnet, dass** der Toleranzbereich, dessen Einhaltung als Indiz für stabiles Raddrehverhalten bewertet wird, durch Vorgabe eines Toleranzbandes in der Größenordnung von 0,02g bis 0, 1g, insbesondere 0,05g, bezogen auf das mit dem ersten Filter gewonnenen Signals gebildet wird, wobei "g" die Erdbeschleunigungskonstante bedeutet.

6. Verfahren nach Anspruch 1 oder 2, **dadurch gekennzeichnet, dass** beim Erkennen von stabilem Raddrehverhalten die Fahrzeug-Referenzgeschwindigkeit korrigiert bzw. angehoben und dadurch der Drehgeschwindigkeit der Räder angenähert wird.

## Claims

1. Method for detecting a stable or unstable wheel behaviour by preventing or reducing incorrect control operations or incorrect adjustments of a traction control system in a situation which is critical for incorrect adjustments, such as uphill travel, in particular for vehicles with all-wheel drive, in which a vehicle reference speed and a vehicle deceleration signal are derived from the rotational behaviour of the individual vehicle wheels, and in which a vehicle deceleration signal is acquired using a longitudinal deceleration sensor (a B sensor), wherein the time profile of the two deceleration signals, specifically of the deceleration signal which is derived from the wheel behaviour and of the deceleration signal which is acquired using the longitudinal deceleration sensor (B sensor) is compared, and on the basis of an analysis of the time profile of two deceleration signals it is detected whether stable or unstable wheel behaviour is occurring, **characterized in that** in order to compare and analyse the deceleration signals a signal is formed which represents the difference between the deceleration signal derived from the wheel behaviour and the deceleration signal acquired using the longitudinal deceleration sensor (B sensor), and **in that** the difference signal is evaluated using a multistage filter arrangement.

2. Method according to Claim 1, **characterized in that** the change in the difference signal over time is evaluated in order to detect stable or unstable wheel behaviours.

3. Method according to Claim 1, **characterized in that** a filter arrangement having a first low-pass filter whose cut-off frequency is of the order of magnitude of 1 to 3 Hz, and having at least a second low-pass filter whose cut-off frequency is of the order of magnitude of 4 to 10 Hz, is used, and **in that** the profile and/or the amplitude of the signals acquired using the low-pass filters are compared with one another and are/is evaluated in order to detect an unstable and stable wheel profile.

4. Method according to Claim 3, **characterized in that** a deviation of the signal acquired with the second filter from the signal acquired with the first filter within a predefined tolerance range is evaluated as an indication of a stable behaviour of the vehicle wheels, while upward transgression of the tolerance range is considered to be an indication of unstable running of the wheel.

5. Method according to Claim 4, **characterized in that** the tolerance range with which compliance is evaluated as an indication of stable wheel behaviour is formed by predefining a tolerance band of the order of magnitude of 0.02g to 0.1g, in particular 0.05g, with respect to the signal acquired with the first filter, wherein "g" is the gravitational constant.

6. Method according to Claim 1 or 2, **characterized in that**, upon the detection of stable wheel behaviour, the vehicle reference speed is corrected or raised and thereby approximated to the rotational speed of the wheels.

## Revendications

1. Procédé de détection d'un comportement stable ou instable de rotation des roues par inhibition ou réduction des régulations d'erreurs de régulation ou d'erreurs d'action d'un système de régulation du patinage moteur (système ASR) dans une situation dans laquelle les actions erronées sont critiques, par exemple la descente d'une pente, en particulier pour véhicules dont toutes les roues sont motrices,
dans lequel une vitesse de référence du véhicule et un signal de ralentissement du véhicule sont déduits à partir du comportement de rotation des différentes roues du véhicule et dans lequel un signal de ralentissement du véhicule est obtenu à l'aide d'un détecteur de ralentissement longitudinal (détecteur B),
les évolutions dans le temps des deux signaux de ralentissement, à savoir du signal de ralentissement déduit du comportement de rotation des roues et du signal de ralentissement obtenu à l'aide du détecteur de ralentissement longitudinal (détecteur B) sont comparées et il est détecté si la rotation des roues est stable ou instable à l'aide d'une analyse des évolutions dans le temps des deux signaux de ralentissement
**caractérisé en ce que**
un signal qui représente la différence entre le signal du ralentissement déduit du comportement de rotation des roues et le signal de ralentissement obtenu à l'aide du détecteur de ralentissement longitudinal (détecteur B) est formé pour comparer et analyser les signaux de ralentissement et
**en ce que** le signal de différence est évalué à l'aide d'un ensemble de filtrage à plusieurs étages.

2. Procédé selon la revendication 1, **caractérisé en ce que** la variation dans le temps du signal de différence est évaluée pour détecter si les roues tournent de manière stable ou instable.

3. Procédé selon la revendication 1, **caractérisé en ce qu'**il utilise un ensemble de filtrage qui présente un premier filtre passe-bas dont la fréquence limite est de l'ordre de 1 à 3 Hz et au moins un deuxième filtre passe-bas dont la fréquence limite est de l'ordre de 4 à 10 Hz, et **en ce que** l'évolution et/ou l'amplitude des signaux obtenus à l'aide des filtres passe-bas sont comparées les unes aux autres et sont évaluées pour détecter si les roues se comportent de manière instable ou stable.

4. Procédé selon la revendication 3, **caractérisé en ce qu'**un écart entre le signal obtenu à l'aide du deuxième filtre par rapport au signal obtenu à l'aide du premier filtre et situé à l'intérieur d'une plage prédéterminée de tolérances est évalué comme indice d'un comportement stable de rotation des roues du véhicule tandis que le dépassement de la plage de tolérance est considéré comme indice d'un déplacement instable des roues.

5. Procédé selon la revendication 4, **caractérisé en ce que** la plage de tolérance dont le respect est évalué pour donner un indice d'un comportement stable de rotation des roues est formée en définissant une plage de tolérance de l'ordre de 0,02 g à 0,1 g et en particulier de 0,05 g par rapport au signal obtenu à l'aide du premier filtre, "g" représentant la constante d'accélération de la gravité terrestre.

6. Procédé selon les revendications 1 ou 2, **caractérisé en ce qu'**en cas de détection d'un comportement stable de rotation des roues, la vitesse de référence du véhicule est corrigée ou relevée, pour ainsi approcher la vitesse de rotation des roues.
